# EUROPEAN PATENT SPECIFICATION

(11) **EP 3 765 668 B1**
(45) Date of publication and mention of the grant of the patent: **19.02.2025**
(21) Application number: 19767493.0
(22) Date of filing: 28.01.2019
(51) Int. Cl.: D21C 9/02, D21C 7/06, D21C 9/10, B65G 33/00, D21B 1/22

(54) **ARRANGEMENT AND METHOD FOR TRANSPORTING PULP FROM ONE PROCESS STAGE TO A SUBSEQUENT PROCESS STAGE**
ANORDNUNG UND VERFAHREN ZUM TRANSPORTIEREN VON ZELLSTOFF VON EINER VERFAHRENSSTUFE IN EINE NACHFOLGENDE VERFAHRENSSTUFE
SYSTÈME ET PROCÉDÉ PERMETTANT DE TRANSPORTER DE LA PÂTE D'UNE ÉTAPE DE TRAITEMENT À UNE ÉTAPE DE TRAITEMENT SUIVANTE

(30) Priority: 12.03.2018 SE 1850268
(43) Date of publication of application: 20.01.2021
(73) Proprietor: VALMET AB, 851 94 Sundsvall (SE)
(72) Inventor: ORGÅRD, Jonas, 860 13 Stöde (SE); BERGENHOLM, Anders, 853 58 Sundsvall (SE)
(74) Representative: Novagraaf Group
(86) International application number: PCT/SE2019/050058
(87) International publication number: WO 2019/177508

(56) References cited:
- EP-A2- 2 752 522
- WO-A1-2010/081476
- WO-A1-2015/199604
- WO-A1-90/02224
- WO-A1-97/13026
- CN-A- 101 823 070
- CN-B- 104 492 535
- DE-A1- 10 120 636
- US-A- 3 293 118
- US-A- 4 983 256
- US-A1- 2009 221 814

## Description

### TECHNICAL FIELD

The present invention relates to an arrangement and method for transporting pulp from one process stage to a subsequent process stage, wherein pulp is received, diluted and pressurized before being pumped to the next process stage.

### BACKGROUND

When treating cellulose-containing pulp in a pulping process, the pulp is subjected to a number of process stages and transported from one stage to the next, often by being pumped along a conduit or pipe to arrive at the next treatment stage. Especially at the bleaching stage the pulp is washed and subsequently dewatered a number of times until the chemical bleaching agents have been completely removed.

One problem associated with pumping pulp is that the high temperature of the pulp during treatment causes cavitation in the pump that prevents efficient pumping, and in order to avoid these problems the pulp is generally fed to a standpipe having the pump arranged at an outlet near the bottom. In the standpipe, pulp waiting to be transported generates a pressure at the bottom that prevents cavitation so that the pump can be used without risking damage or interruptions to the process. Thus, a number of standpipes are generally provided, one for each washing stage and also for some of the other process stages during the pulping process, and although they do provide a solution to the problems associated with pumping they are also cumbersome and space consuming, especially since they generally need to be 5-10 m high. In order to feed the pulp to the standpipe, the pulp mill itself must be at least 10 m high, so that the press arranged to feed pulp into the standpipe can be arranged at this height. Since the amount of pulp in the standpipe varies, the pressure at its bottom also varies so that it at times could be too low to achieve a reliable pumping of the pulp.

Examples of transporting arrangements and methods within this field are shown by WO2007/117202 (Metso Paper Inc.), WO2005/098127 (Kvaerner Pulping AB) and US2017/0268170 (Sulzer Management AG).

There is therefore a need for an improved arrangement and method for transporting pulp.

### SUMMARY OF THE INVENTION

The object of the present invention is to provide an improved arrangement and method for transporting pulp from one process stage to a subsequent process stage where the problems relating to pumping pulp are resolved but the problems relating to using standpipes are simultaneously avoided. This is achieved through an arrangement and method according to the appended independent claims. Especially beneficial features of the present invention are set out in the dependent claims.

According to the invention as defined in claim 1, the arrangement comprises a receiving portion for receiving pulp at a first dry solids content and a first pressure, a dilution portion for diluting pulp to a second solid content and for holding the pulp at a second pressure, a screw conveyor for transporting pulp from the receiving portion to the dilution portion, the screw conveyor comprising a screw, and the screw conveyor is arranged to transport the pulp and to also increase the pressure from the first pressure to the second pressure, and wherein the dilution portion has an outlet connected to a pump for pumping diluted pulp from the arrangement to a subsequent process stage, wherein the arrangement further comprises a pressure sensor arranged to detect the pressure inside the dilution portion, and wherein further the pump is arranged to control the pressure by operating in response to the detected pressure inside the dilution portion.

The corresponding method claim for transferring pulp from one process stage to a subsequent process stage is defined in the current claim 9.

By pressurizing the pulp using the screw conveyor, the dilution portion can be kept at an elevated pressure and the pulp can be fed to a pump while still at this elevated pressure, thereby resolving the problems associated with pumping but also allowing for a space efficient solution that can be kept at a limited height and can be arranged in a more versatile way within a pulp mill. The pump is then operated to control the pressure in the dilution portion by altering the amount of pulp pumped in response to a detected pressure in the dilution portion.

According to an aspect of the invention, the pressure increase is achieved through providing a tapering screw portion through which the pulp is transported before entering the dilution portion. Thereby, a gradual pressure increase is achieved, independent of the rotation speed of the screw. In another embodiment, the screw conveyor is arranged to increase the pressure by providing a screw portion with smaller pitch than at least one other screw portion. Thereby, the pressure increase can be effected while maintaining a uniform shape of the screw and an outer wall of a transport portion between the receiving portion and the dilution portion, while still being independent of the rotation speed of the screw. In yet another embodiment, the screw conveyor is arranged to increase the pressure by controlling the turning speed of the screw, thereby facilitating controlling the pressure and altering the pressure depending on properties such as a pressure in the dilution portion at a given time or an operation of a pump connected to the dilution portion.

According to another aspect of the invention, the dilution portion further comprises a fluid inlet and agitation means for mixing the pulp with additional fluid to achieve a diluted pulp, and the agitation means preferably comprises an agitation screw. Thereby, the pulp can be diluted to a lower dry solids content as desired to make it suitable for pumping to a subsequent process stage and also to form part of a washing/dewatering cycle. By using an agitation screw, the mixing of the pulp with the dilution fluid is thorough and allows for a uniform mixture suitable for pumping.

In one embodiment, the screw and the agitation screw are arranged on a common axis. This allows for the use of one single screw conveyor that has a screw portion for transporting and pressurizing and another screw portion for the agitation screw for mixing the pulp with dilution fluid. Only one motor and controller are required in this embodiment, which also provides a space efficient and convenient arrangement for transporting, pressurizing and diluting pulp.

In another embodiment, the screw and the agitation screw are arranged on separate axes, said separate axes preferably being non-parallel. This allows for altering the rotational speed of each of the screws independent of the other, and by providing the agitation screw at an angle to the screw a more versatile arrangement is achieved.

According to one aspect of the invention, the dilution portion is arranged at a distance from the screw conveyor and the arrangement further comprises a connection between the screw conveyor and the dilution portion for transporting pulp, said connection preferably being a conduit. Thereby the dilution portion can be arranged separate from the receiving portion and screw conveyor, allowing for placement according to available space or other factors that may facilitate the transportation to the next process stage.

According to another aspect of the invention, the second pressure is at least 30 kPa, preferably at least 40 kPa, more preferably at least 50 kPa, in order to eliminate the risk of damage to the pump.

As stated above, the dilution portion has an outlet connected to a pump for pumping diluted pulp from the arrangement to a subsequent process stage, and wherein the arrangement preferably further comprises a pressure sensor arranged to detect the pressure inside the dilution portion. Thereby, the detected pressure can be used to control the operation of the pump and preferably also of the screw conveyor and the introduction of the additional fluid, so that the pressure in the dilution portion can be maintained at a suitable level and the mixing of the pulp with the additional fluid can be performed in an efficient manner.

Many additional benefits and advantages of the invention will become readily apparent to the person skilled in the art in view of the detailed description below.

### DRAWINGS

The invention will now be described in more detail with reference to the appended drawings, wherein:
- Fig. 1: discloses an arrangement for transferring pulp according to a preferred embodiment of the present invention in a side view;
- Fig. 2: discloses an arrangement according to a second embodiment of the present invention in a side view;
- Fig. 3: discloses an arrangement according to a third embodiment of the present invention in a side view; and
- Fig. 4: discloses an arrangement according to a fourth embodiment of the present invention in a view from above.

### DETAILED DESCRIPTION

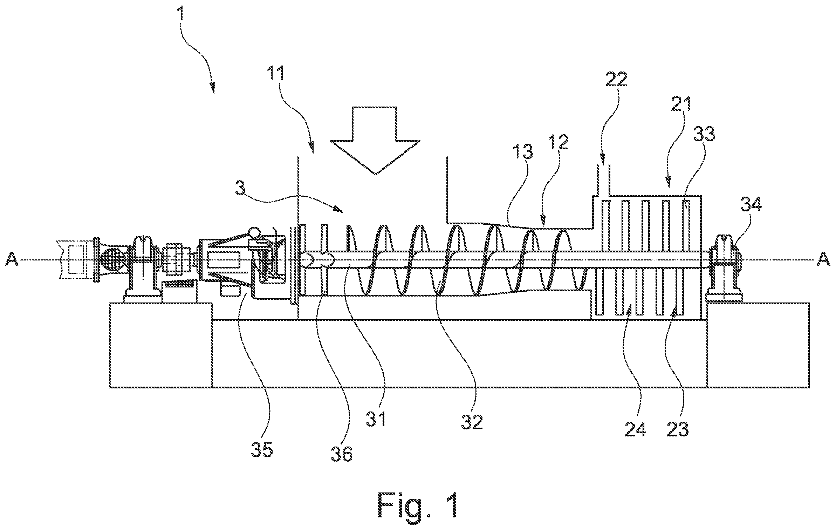

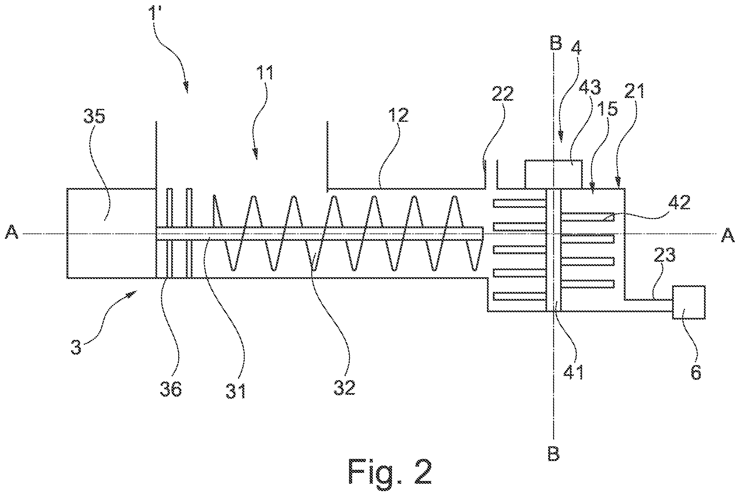

Fig. 1 discloses an arrangement 1 for transferring pulp from one process stage to a subsequent process stage according to a preferred embodiment of the present invention. The arrangement 1 comprises a receiving portion 11 into which pulp is received in a direction shown by the arrow. From the receiving portion 11 the pulp is transported to a dilution portion 21 by means of a screw conveyor 3 having a screw 32 arranged around a first axle 31 that is journalled by a journal 34 and driven by a motor 35 to rotate about a first axis A. The screw 32 transports the pulp along a transport portion 12 into the dilution portion 21 where additional fluid is supplied to a dilution tank 24 through a fluid inlet 22 and mixed thoroughly with the pulp by means of an agitation screw 33 before being removed from the arrangement 1 through an outlet 23 that is connected to a pump 6 (see Figs. 2-3).

The pulp received by the receiving portion 11 has typically undergone an earlier process stage and is generally dewatered to have a dry solids content of 30 %. Pulp at a bottom of the receiving portion 11 is at a first pressure, created by the weight of the pulp held in the receiving portion 11. The first pressure will therefore vary depending on the amount and dry solids content of the pulp in the receiving portion 11 at any given moment. The screw conveyor 3 can comprise a second agitation screw 36 that serves to prevent formation of lumps of pulp that could prevent the efficient use of the arrangement 1.

The screw conveyor 3 with the screw 32 thus acts to transport the pulp but simultaneously to pressurize the pulp so that the first pressure is gradually increased to a second pressure at the dilution portion 21. In this preferred embodiment, the pressure increase is achieved by a tapering portion 13 of the transport portion 12 through which the pulp is transported. Thus, the pressure of the pulp is gradually increased along the tapering portion 13 to reach the second pressure before the pulp is being fed by the screw 32 into the dilution portion 21 where it is maintained at the second pressure until it is removed through the outlet 23. Once en elevated pressure has been created in the dilution portion 21, the pressure is controlled by the pump 6 acting in response to a detected pressure inside the dilution portion 21. By slowing the operation of the pump, the pressure in the dilution portion 21 is increased and by increasing the operation of the pump a decrease of pressure is achieved. The screw 32 will generally operate in response to an amount of pulp introduced into the receiving portion 11 and strive to maintain a pulp level that is sufficient to generate the first pressure and prevent the screw from leakage, but it is generally advantageous to prevent excessive build-up of pulp in the receiving portion 11. Due to the operation of the pump 6 in maintaining the pressure in the dilution portion 21, the screw 32 can operate continuously to pressurize the pulp during transport through the transport portion 12 so that the operation of the arrangement 1 is efficient.

The additional fluid or dilution fluid is supplied in a suitable amount to dilute the pulp to a dry solids content suitable for pumping, preferably around 10 %. In some embodiments dilution fluid may also be supplied in the receiving portion 11 or in the transport portion 12 to make the pulp easier to transport, but the amount of dilution fluid in the arrangement 1 as a whole is determined in order to achieve the desired dry solids content in the dilution portion 21.

The dimensions of the receiving portion 11, transport portion 12 and dilution portion 21 are selected depending on the amount of pulp per time that is to be transferred by the arrangement 1, and the dilution portion 21 is dimensioned especially to allow for a suitable staying time for the pulp during dilution and mixing so that a uniform mixture is achieved.

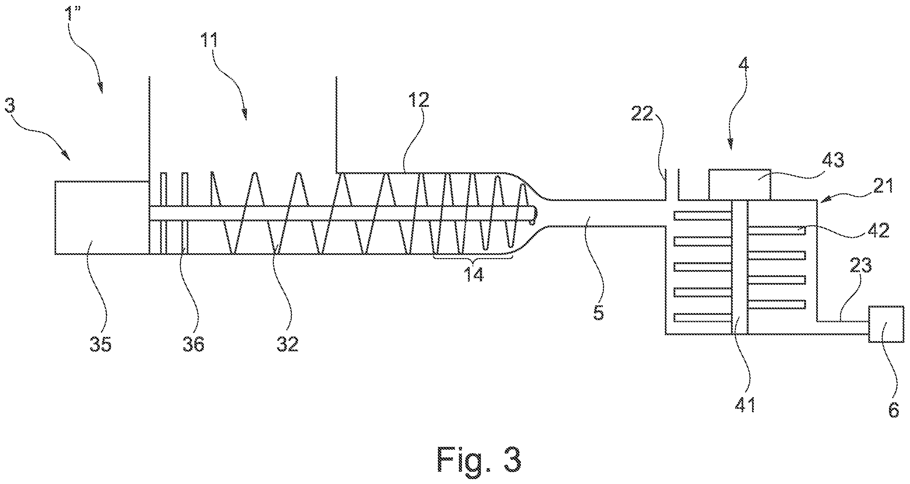

Figs. 2 and 3 disclose alternative embodiments of the invention and will now be described in more detail. Those features that these embodiments have in common with the embodiment of Fig. 1 are given the same reference numerals as in Fig. 1 and operate in the manner described herein with reference to the preferred embodiment.

In Fig. 2, an arrangement 1' for transferring pulp is disclosed according to a second embodiment of the invention. In this second embodiment, the pressure increase in the transport portion 12 is achieved through varying the rotational speed of the screw 32 so that a higher speed results in a pressure increase of the pulp. Also, in this embodiment the agitation screw in the dilution portion 21 is formed as a separate agitation screw arrangement 4 with an agitation screw axle 41 around which the agitation screw 42 is arranged. The agitation screw arrangement 4 is operated by a second motor 43 and the agitation screw axle 41 extends along a second axis B.

By the provision of a separate agitation screw arrangement 4, the mixing of the pulp and the dilution fluid can be performed independently of the transporting and pressurizing of the pulp performed by the screw conveyor 3. By arranging the agitation screw arrangement 4, so that the second axis B is non-parallel to the first axis A, i.e. with the second axis B at an angle with respect to the first axis A, a greater versatility is also achieved.

Fig. 3 discloses a third embodiment of an arrangement 1" that differs from the second embodiment of Fig. 2 by the arrangement of a connection 5 between the transporting portion 12 and the dilution portion 21 to allow the dilution portion 21 to be separated from the receiving portion 11 and transporting portion 12. Preferably, the connection 5 is in the form of a conduit 5. The pressure increases along the transporting portion 12 is achieved through a screw portion 14 with smaller pitch than the pitch of the screw 32 in the receiving portion 11, or at least with smaller pitch than at least one other portion of the screw 32.

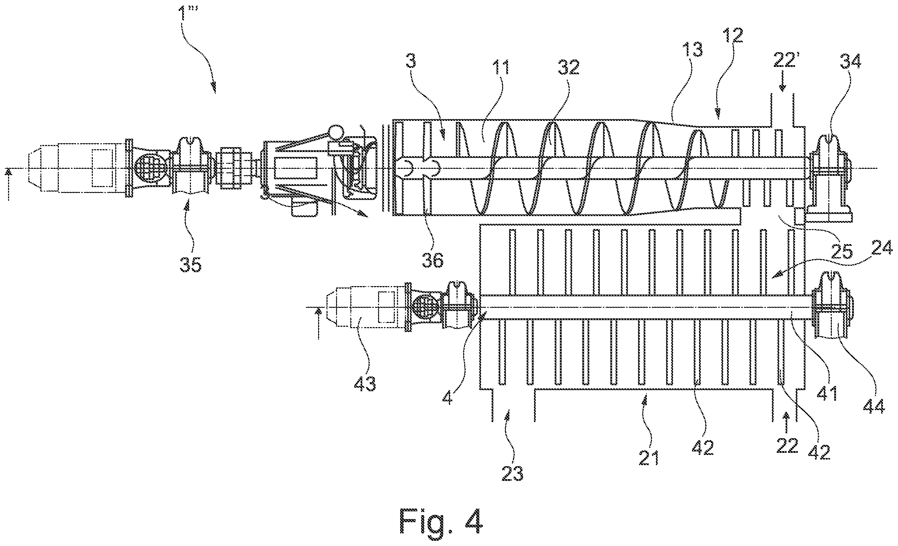

Fig. 4 discloses a fourth embodiment of the arrangement 1‴ in a view from above, differing from the previously described embodiments through the arrangement of the screw conveyor 3 and the agitation screw 4 in parallel. Pulp entering the receiving portion 11 is transported by the screw 32 through the transport portion 12 and is allowed to flow through a passage 25 into the dilution portion 21. By supplying dilution fluid through two separate inlets 22, 22' any clogging or blocking of the screw 32 is prevented and the movement through the arrangement 1‴ facilitated. The agitation screw 4 is in this embodiment journalled at an agitation screw journal 44, but it is to be noted that other kinds of screw arrangements may also be used.

The operation of the arrangements 1, 1', 1", 1‴ will now be described in more detail to disclose the method for transferring pulp according to the present invention.

Pulp is received in the receiving portion 11, said pulp arriving from an earlier process stage that is typically a washing stage where the pulp has been diluted and then dewatered to remove bleaching chemicals or the like. Upon arrival in the receiving portion 11, the pulp typically has a dry solids content of about 30 %, but this can be varied depending on properties of the process where the arrangement 1, 1', 1", 1‴ is placed.

The pulp will remain in the receiving portion 11, which also acts as a storage for pulp, and during its time in the receiving portion 11 the pulp will steadily move towards the bottom until it is engaged by the screw 32 of the screw conveyor 3 that moves the pulp along towards the transporting portion 12. Before reaching the transporting portion 12, the pulp is held at a first pressure that is determined by the amount of pulp in the receiving portion 11 pressing down towards the bottom and thereby applying a pressure to the pulp at the bottom. Through the movement caused by the screw 32, the pulp is pressurized in the transporting portion 12 in a suitable way to gradually increase the pressure until a predetermined second pressure is reached. The increase is in the preferred embodiment described above achieved through passing the pulp through a tapering portion 13 of the transporting portion 12, but other ways such as a smaller pitch of the screw or an increased rotational speed of the screw 32 can also be used as is described with reference to the third and second embodiments, respectively.

The pulp is delivered at the second pressure into the dilution portion 21, where additional fluid is provided through the inlet 22 and the agitation screw 42 mixes the pulp with the dilution fluid until a pulp with a uniform dry solids content of about 10% is achieved. A desired dilution time is preferably determined and operation of the arrangement 1, 1', 1", 1‴ adjusted to allow the pulp to remain in the dilution portion 21 for at least the desired dilution time, so that a thorough mixing can be performed. Preferably, the desired dilution time is at least 2-5 seconds but other dilution times may also be used if suitable for a specific embodiment of the present invention. If desired, the pulp can be diluted already in the receiving portion 11 or in the transporting portion 12 to make it easier to handle and transport the pulp and to prevent clogging of the screw 32.

After the pulp and the dilution fluid have been thoroughly mixed, the resulting pulp with a lower dry solids content is removed through the outlet 23 and transported to the pump 6 that pumps the pulp to a subsequent process stage. Typically, the arrangement and method of the present invention are used after a dewatering stage and acts as a washing stage so that the diluted pulp is pumped to another dewatering stage before being subjected to a repeated wash but other placements and uses during the pulping process are also possible. The arrangement 1, 1', 1", 1‴ is preferably operated to maintain the second pressure in the dilution portion 21, or at least to maintain the pressure within a pressure range centered on the second pressure. A pressure sensor 15 is preferably provided for this purpose in the dilution portion 21, and by controlling the operation of the pump 6 and the screw conveyor 3 the pressure can be increased or decreased in order to adjust the pressure to remain at the second pressure or within a pressure range to which the second pressure belongs. An excessive pressure inside the dilution portion 21 can lead to damages to the arrangement 1, 1', 1", 1"', but if the pressure were to sink below a predetermined lower threshold the operation of the pump 6 would be less efficient or hindered altogether; it is therefore a significant advantage to be able to control the pressure of the pulp in the dilution portion 21.

Another way of controlling the operation of the arrangement 1, 1', 1", 1‴ is to provide a level sensor, pressure sensor or flow sensor (not shown) to the receiving portion 11 and to control the operation of the screw 32 depending on the amount of pulp received. However, since there is a risk of damages to the arrangement 1, 1', 1", 1" due to the pressure in the dilution portion 21 being outside a preferred range or deviating from the second pressure, it is important to control the operation of the arrangement 1, 1', 1", 1‴, so that a steady supply of pressurized pulp to the dilution portion 21 can be balanced by a removal via the outlet 23 and pump 6 of the diluted pulp.

Although the present invention has been described with reference to the three embodiments above, it will be apparent to those skilled in the art that many variations and modifications can be done within the scope of the invention as described in the specification and defined in the appended claims. It is also to be noted that features from the various embodiments described herein may freely be combined, unless it is explicitly stated that such a combination would be unsuitable. For example, the different ways of increasing the pressure of the pulp in the transporting portion of the arrangement could be combined by providing a screw with smaller pitch in a tapering part of the transporting portion, but other combinations and variations would also be possible.

## Claims

1. Arrangement (1, 1', 1", 1‴) for transferring pulp from one process stage to a subsequent process stage, the arrangement comprising:
a receiving portion (11) for receiving pulp at a first dry solids content and a first pressure,
a dilution portion (21) for diluting pulp to a second solid content and for holding the pulp at a second pressure, and
a screw conveyor (3) for transporting pulp from the receiving portion (11) to the dilution portion (21), the screw conveyor (3) comprising a screw (32),
wherein the screw conveyor (3) is arranged to transport the pulp and to also increase the pressure from the first pressure to the second pressure,
wherein the dilution portion (21) has an outlet (23) connected to a pump (6) for pumping diluted pulp from the arrangement to a subsequent process stage, wherein the arrangement further comprises a pressure sensor (15) arranged to detect the pressure inside the dilution portion (21),
and wherein further the pump (6) is arranged to control the pressure by operating in response to the detected pressure inside the dilution portion (21).

2. Arrangement according to claim 1, wherein the screw conveyor (3) is arranged to increase the pressure by transporting the pulp through a tapering portion (13) or by controlling the turning speed of the screw (32).

3. Arrangement according to claim 1, wherein the screw conveyor (3) is arranged to increase the pressure by providing a screw portion (14) with smaller pitch than the pitch of the screw (32) in the receiving portion (11).

4. Arrangement according to any previous claim, wherein the dilution portion (21) further comprises a fluid inlet (22) and agitation means (4) for mixing the pulp with additional fluid to achieve a diluted pulp, and wherein the agitation means (4) preferably comprises an agitation screw (33, 42).

5. Arrangement according to claim 4, wherein the screw (32) and the agitation screw (33) are arranged on a common axle (31).

6. Arrangement according to claim 4, wherein the screw (32) and the agitation screw (33) are arranged along separate axes (A, B), said separate axes preferably being non-parallel.

7. Arrangement according to any of claims 1-4 or 6, wherein the dilution portion (21) is arranged at a distance from the screw conveyor (3) and the arrangement further comprises a connection (5) between the screw conveyor (3) and the dilution portion (21) for transporting pulp, said connection preferably being a conduit.

8. Arrangement according to any previous claim, wherein the second pressure is at least 30 kPa, preferably at least 40 kPa, more preferably at least 50 kPa.

9. Method for transferring pulp from one process stage to a subsequent process stage, the method comprising:
receiving pulp in a receiving portion (11) at a first dry solids content and a first pressure,
transporting pulp from the receiving portion (11) to a dilution portion (21), by means of a screw conveyor, and
diluting the pulp to a second solids content in the dilution portion (21), and
pressurizing the pulp so that the pulp is at a second pressure in the dilution portion (21),
wherein the pressurizing of the pulp takes place during transporting to the dilution portion (21), and the method further comprising detecting a pressure in the dilution portion (21) and activating a pump to pump diluted fluid from the dilution portion (21) in response to the detected pressure and wherein the pressurizing and transporting of the pulp are performed by a screw conveyor (3) comprising a screw (32).

10. Method according to claim 9, wherein the pressurizing is performed by transporting the pulp through a tapering portion (13) of the screw conveyor (3).

11. Method according to any of claims 9-10, further comprising diluting the pulp in the dilution portion (21) by adding a dilution fluid through a fluid inlet (22) and mixing the pulp with the dilution fluid to achieve a diluted pulp.

## Patentansprüche

1. Anordnung (1, 1', 1", 1‴) zum Übertragen von Zellstoff von einer Prozessstufe zu einer nachfolgenden Prozessstufe, die Anordnung umfassend:
einen Aufnahmeabschnitt (11) zum Aufnehmen von Zellstoff mit einem ersten Trockensubstanzgehalt und einem ersten Druck,
einen Verdünnungsabschnitt (21) zum Verdünnen von Zellstoff auf einen zweiten Feststoffgehalt und zum Halten des Zellstoffs auf einem zweiten Druck, und
einen Schneckenförderer (3) zum Transportieren von Zellstoff von dem Aufnahmeabschnitt (11) zu dem Verdünnungsabschnitt (21), der Schneckenförderer (3) umfassend eine Schnecke (32),
wobei der Schneckenförderer (3) angeordnet ist, um den Zellstoff zu transportieren und außerdem den Druck von dem ersten Druck auf den zweiten Druck zu erhöhen,
wobei der Verdünnungsabschnitt (21) einen Auslass (23) aufweist, der mit einer Pumpe (6) verbunden ist, zum Pumpen des verdünnten Zellstoffs aus der Anordnung zu einer nachfolgenden Prozessstufe, wobei die Anordnung ferner einen Drucksensor (15) umfasst, der angeordnet ist, um den Druck im Inneren des Verdünnungsabschnitts (21) zu erfassen,
und wobei die Pumpe (6) ferner angeordnet ist, um den Druck zu steuern, durch Arbeiten, als Reaktion auf den erfassten Druck im Inneren des Verdünnungsabschnitts (21).

2. Anordnung nach Anspruch 1, wobei der Schneckenförderer (3) angeordnet ist, um den Druck durch Transportieren des Zellstoffs durch einen sich verjüngenden Abschnitt (13) oder durch Steuern der Drehgeschwindigkeit der Schnecke (32) zu erhöhen.

3. Anordnung nach Anspruch 1, wobei der Schneckenförderer (3) angeordnet ist, um den Druck durch Bereitstellen eines Schneckenabschnitts (14) mit kleinerer Steigung als die Steigung der Schnecke (32) in dem Aufnahmeabschnitt (11) zu erhöhen.

4. Anordnung nach einem der vorstehenden Ansprüche, wobei der Verdünnungsabschnitt (21) ferner einen Fluideinlass (22) und Rührmittel (4) zum Mischen des Zellstoffs mit zusätzlichem Fluid, um einen verdünnten Zellstoff zu erreichen, umfasst, und wobei das Rührmittel (4) vorzugsweise eine Rührschnecke (33, 42) umfasst.

5. Anordnung nach Anspruch 4, wobei die Schnecke (32) und die Rührschnecke (33) auf einer gemeinsamen Achse (31) angeordnet sind.

6. Anordnung nach Anspruch 4, wobei die Schnecke (32) und die Rührschnecke (33) entlang separater Achsen (A, B) angeordnet sind, wobei die separaten Achsen vorzugsweise nicht parallel sind.

7. Anordnung nach einem der Ansprüche 1 bis 4 oder 6, wobei der Verdünnungsabschnitt (21) in einem Abstand von dem Schneckenförderer (3) angeordnet ist und die Anordnung ferner eine Verbindung (5) zwischen dem Schneckenförderer (3) und dem Verdünnungsabschnitt (21) zum Transportieren von Zellstoff umfasst, wobei die Verbindung vorzugsweise eine Leitung ist.

8. Anordnung nach einem der vorstehenden Ansprüche, wobei der zweite Druck mindestens 30 kPa, vorzugsweise mindestens 40 kPa, mehr bevorzugt mindestens 50 kPa beträgt.

9. Verfahren zum Übertragen von Zellstoff von einer Prozessstufe zu einer nachfolgenden Prozessstufe, das Verfahren umfassend:
Aufnehmen von Zellstoff in einem Aufnahmeabschnitt (11) bei einem ersten Trockensubstanzgehalt und einem ersten Druck,
Transportieren von Zellstoff von dem Aufnahmeabschnitt (11) zu einem Verdünnungsabschnitt (21) mittels eines Schneckenförderers, und
Verdünnen des Zellstoffs auf einen zweiten Feststoffgehalt in dem Verdünnungsabschnitt (21) und Druckbeaufschlagen des Zellstoffs, so dass der Zellstoff in dem Verdünnungsabschnitt (21) einen zweiten Druck aufweist,
wobei das Druckbeaufschlagen des Zellstoffs während des Transportierens zu dem Verdünnungsabschnitt (21) stattfindet und das Verfahren ferner umfassend das Erfassen eines Drucks in dem Verdünnungsabschnitt (21) und das Aktivieren einer Pumpe, um verdünntes Fluid aus dem Verdünnungsabschnitt (21) als Reaktion auf den erfassten Druck zu pumpen, und wobei das Druckbeaufschlagen und das Transportieren des Zellstoffs durch einen Schneckenförderer (3) durchgeführt werden, umfassend eine Schnecke (32).

10. Verfahren nach Anspruch 9, wobei das Druckbeaufschlagen durch Transportieren des Zellstoffs durch einen sich verjüngenden Abschnitt (13) der Schneckenförderers (3) erfolgt.

11. Verfahren nach einem der Ansprüche 9 bis 10, ferner umfassend das Verdünnen des Zellstoffs in dem Verdünnungsabschnitt (21) durch Zugeben eines Verdünnungsfluids durch einen Fluideinlass (22) und das Mischen des Zellstoffs mit dem Verdünnungsfluid, um einen verdünnten Zellstoff zu erreichen.

## Revendications

1. Dispositif (1, 1', 1", 1‴) destiné à transférer de la pâte d'une étape de traitement à une étape de traitement ultérieure, le dispositif comprenant :
une partie de réception (11) destinée à recevoir de la pâte à une première teneur en matière solide sèche et à une première pression,
une partie de dilution (21) destinée à diluer la pâte jusqu'à une seconde teneur en matières solides et à maintenir la pâte à une seconde pression, et
un convoyeur à vis (3) destiné à transporter la pâte de la partie de réception (11) à la partie de dilution (21), le convoyeur à vis (3) comprenant une vis (32),
dans lequel le convoyeur à vis (3) est disposé pour transporter la pâte et pour également augmenter la pression de la première pression à la seconde pression,
dans lequel la partie de dilution (21) possède une sortie (23) reliée à une pompe (6) destinée à pomper de la pâte diluée du dispositif vers une étape de traitement ultérieure, dans lequel le dispositif comprend en outre un capteur de pression (15) disposé pour détecter la pression à l'intérieur de la partie de dilution (21),
et dans lequel, en outre, la pompe (6) est agencée pour commander la pression en fonctionnant en réponse à la pression détectée à l'intérieur de la partie de dilution (21).

2. Dispositif selon la revendication 1, dans lequel le convoyeur à vis (3) est disposé pour augmenter la pression par transport de la pâte à travers une partie effilée (13) ou par commande de la vitesse de rotation de la vis (32).

3. Dispositif selon la revendication 1, dans lequel le convoyeur à vis (3) est disposé pour augmenter la pression par la fourniture d'une partie de vis (14) avec un pas plus petit que le pas de la vis (32) dans la partie de réception (11).

4. Dispositif selon l'une quelconque des revendications précédentes, dans lequel la partie de dilution (21) comprend en outre une entrée de fluide (22) et un moyen d'agitation (4) destiné à mélanger la pâte avec un fluide supplémentaire afin d'obtenir une pâte diluée, et dans lequel le moyen d'agitation (4) comprend de préférence une vis d'agitation (33, 42).

5. Dispositif selon la revendication 4, dans lequel la vis (32) et la vis d'agitation (33) sont disposées sur un axe commun (31).

6. Dispositif selon la revendication 4, dans lequel la vis (32) et la vis d'agitation (33) sont disposées le long d'axes séparés (A, B), lesdits axes séparés étant de préférence non parallèles.

7. Dispositif selon l'une quelconque des revendications 1 à 4 ou 6, dans lequel la partie de dilution (21) est disposée à une certaine distance du convoyeur à vis (3) et le dispositif comprend en outre une liaison (5) entre le convoyeur à vis (3) et la partie de dilution (21) permettant de transporter de la pâte, ladite liaison étant de préférence un conduit.

8. Dispositif selon l'une quelconque des revendications précédentes, dans lequel la seconde pression est d'au moins 30 kPa, de préférence d'au moins 40 kPa, plus préférablement d'au moins 50 kPa.

9. Procédé de transfert de pâte d'une étape de traitement à une étape de traitement ultérieure, le procédé comprenant :
la réception de pâte dans une partie de réception (11) à une première teneur en matière solide sèche et à une première pression,
le transport de pâte de la partie de réception (11) vers une partie de dilution (21), au moyen d'un convoyeur à vis, et
la dilution de la pâte à une seconde teneur en matière solide dans la partie de dilution (21), et la pressurisation de la pâte de manière à ce qu'elle soit à une seconde pression dans la partie de dilution (21),
dans lequel la pressurisation de la pâte a lieu pendant le transport vers la partie de dilution (21), et le procédé comprend en outre la détection d'une pression dans la partie de dilution (21) et l'activation d'une pompe pour pomper du fluide dilué depuis la partie de dilution (21) en réponse à la pression détectée, et dans lequel la pressurisation et le transport de la pâte sont effectués par un convoyeur à vis (3) comprenant une vis (32).

10. Procédé selon la revendication 9, dans lequel la pressurisation est effectuée par transport de la pâte à travers une partie effilée (13) du convoyeur à vis (3).

11. Procédé selon l'une quelconque des revendications 9 à 10, comprenant en outre la dilution de la pâte dans la partie de dilution (21) par ajout d'un fluide de dilution à travers une entrée de fluide (22) et mélange de la pâte avec le fluide de dilution afin d'obtenir une pâte diluée.
